# EUROPÄISCHE PATENTANMELDUNG

(11) **EP 0 934 842 A2**
(43) Veröffentlichungstag der Anmeldung: **11.08.1999**
(21) Anmeldenummer: 99100676.8
(22) Anmeldetag: 15.01.1999
(51) Int. Cl.: B60J 11/00, B60J 7/047

(54) **Cabrioletverdeck für ein Kraftfahrzeug**

(30) Priorität: 07.02.1998 DE 19804990
(71) Anmelder: DaimlerChrysler AG, 70567 Stuttgart (DE)
(72) Erfinder: Scheffzük, Matthias, 72074 Tübingen (DE)

(57) **Zusammenfassung**

Ein Cabrioletverdeck für ein Kraftfahrzeug, ist mit seitlichen Dachrahmen und C-Säulen versehen. Das Cabrioletverdeck weist ein rollenartiges Verdeck auf, das mit einer Vielzahl von miteinander verbundenen Einzellamellen versehen ist. Das Verdeck ist in einen Stauraum im hinteren Bereich des Kraftfahrzeuges aufwickelbar. Die Dachrahmen und die C-Säulen sind in den hinteren Bereich des Kraftfahrzeuges absenkbar. Das Verdeck ist bei abgesenktem Dachrahmen und C-Säulen in seitlichen Führungsschienen unterhalb einer Fensterkante des Kraftfahrzeuges in Fahrtrichtung nach vorne zur wenigstens teilweisen Abdeckung des Fahrzeuges aus dem Stauraum ausrollbar.

## Beschreibung

Die Erfindung bezieht sich auf ein Cabrioletverdeck für ein Kraftfahrzeug gemäß dem Oberbegriff von Anspruch 1.

Aus der DE 34 20 641 A1 ist bereits ein Cabrioletverdeck für ein Kraftfahrzeug mit zu- und aufrollbarem Dach bekannt. Das Dach besteht aus Kunststoffplatten, die am Ende der Längsseiten durch Spannzeug verbunden sind. Beim Öffnen des Daches werden die Platten auf eine in einem Stauraum gelagerte Rolle aufgerollt. Die Dachrahmen und die C-Säulen bzw. die B-Säulen sind unbeweglich und bilden die Führungsschiene für das Cabrioletverdeck.

Nachteilig bei den in den zitierten Schriften offenbarten Cabrioletverdecken ist, daß mit dieser Ausgestaltung kein reines Cabrio erzeugt wird, denn sowohl die Dachrahmen als auch die C-Säulen sind weiterhin störend vorhanden. Sowohl die Dachrahmen als auch die C-Säulen hemmen einen ungestörten und vollständigen Cabrioletgenuß. Durch die beschriebenen Cabrioletverdecke wird somit lediglich der Effekt eines großen Schiebedachs erzielt. Ein ähnliches Cabrioletverdeck ist auch aus der DE 94 00 128 U1 bekannt.

Aus der GB-PS 7 56 531 ist ein absenkbares Festdach bekannt, das in seiner abgesenkten Stellung als Abdekkung für einen hinteren Sitzbereich dient. Nachteilig bei diesem absenkbaren Festdach ist unter anderem, daß es nicht als Rolladenverdeck mit miteinander verbundenen Einzellamellen ausgebildet ist. Aus diesem Grund läßt sich das Cabrioletverdeck nicht platzsparend in einem dafür vorgesehenen Stauraum aufwickeln, sondern muß in der in der GB-PS 7 56 531 beschriebenen Weise zusammengeklappt werden. Dadurch ist es ausgeschlossen, den hinteren Sitzbereich für Passagiere zu nutzen. Darüber hinaus stört das in zwei Teilen aufeinander gestapelte Festdach den optischen Eindruck des Cabriolets.

Ein weiteres Cabriolet mit Rolldach ist aus der DE 41 02 067 C2 bekannt. Das dort dargestellte Cabrioletverdeck besteht aus miteinander verbundenen Einzellamellen, die im geschlossenen Zustand im Bereich der C-Säulen des Cabriolets durch eine Abstützeinrichtung gehalten sind. Die Abstützeinrichtung, die im Bereich der C-Säulen angeordnet ist, kann gemeinsam mit dem rolladenartigen Verdeck versenkt werden. Zwar wird durch diese Anordnung die Abstützeinrichtung versenkt, die C-Säulen bleiben jedoch trotzdem bestehen, wodurch genauso wie gemäß der DE 94 00 124 U1 und der DE 34 20 641 A1 nur der Effekt eines großen Schiebedachs erzielt wird.

Eine rolladenartige, aufwickelbare Abdeckung ist aus der DE 32 07 134 C2 bekannt, mit der sich ein Innenraum eines Cabriolets bei geöffnetem Dach auf Höhe der Fensterkante teilweise oder vollständig schließen läßt. Hierbei handelt es sich um ein ausschließlich für die Abdeckung des Innenraums vorgesehenes Teil, das unabhängig vom Cabrioletverdeck ist. D.h., für die Funktionen "Schließen" des Cabrioletverdeckes und "Abdecken" des Innenraums eines Kraftfahrzeuges bei geöffnetem Cabrioletverdeck sind zwei getrennte Vorrichtungen notwendig. Die rolladenartige Abdeckung ist an mindestens einer Fahrzeugtür angeordnet. Zum Abwickeln der Abdeckung wird diese quer zur Fahrtrichtung von Tür zu Tür gespannt. Eine derartige Vorrichtung führt zu höheren Fahrzeugkosten und zu einem höheren Fahrzeuggewicht, weil ein separates Teil aufwendig befestigt und hergestellt werden muß. Darüber hinaus wird die Breite des Innenraumes des Fahrzeugs durch die für die Abdeckung in den Türen angeordnete Aufwickelwalze verkleinert.

Der vorliegenden Erfindung liegt die Aufgabe zugrunde, ein Cabrioletverdeck nach dem Oberbegriff des Patentanspruchs 1 mit einer Vielzahl von miteinander verbundenen Einzellamellen zu schaffen, bei dem im geöffneten Zustand weder Dachrahmen noch C-Säulen störend vorhanden sind, und das gleichzeitig zur wenigstens teilweisen Abdeckung des Fahrzeuginnenraums verwendet werden kann.

Diese Aufgabe wird erfindungsgemäß durch die Merkmale des Anspruchs 1 gelöst. Vorteilhafte Weiterbildungen und Ausgestaltungen der Erfindung ergeben sich aus den Unteransprüchen.

Dadurch, daß die Dachrahmen und die C-Säulen in den hinteren Bereich des Kraftfahrzeuges absenkbar sind, läßt sich aus dem Kraftfahrzeug ein vollwertiges Cabriolet ohne störende Dachrahmen und C-Säulen erzeugen. Gemeinsam mit dem rolladenartigen Verdeck, das in dem hinteren Stauraum auf- bzw. ausrollbar ist, ergibt sich eine optimale Cabrio-Optik. Durch die seitlichen Führungsschienen, die unterhalb der Fensterkante des Kraftfahrzeuges in Fahrzeuglängsrichtung angeordnet sind, läßt sich das Cabrioletverdeck auch als Abdekkung für den Innenraum des Fahrzeuges im geöffneten Zustand verwenden. Mit der Abdeckung läßt sich, je nach Bedarf, der Innenraum entweder teilweise oder vollständig abdecken.

Dadurch, daß das Verdeck auch als Abdeckung für den Innenraum des Fahrzeuges einsetzbar ist, werden Material und Montagekosten für eine zusätzliche Abdeckung gespart. Darüber hinaus reduziert sich das Gesamtgewicht des Fahrzeuges, was zu Vorteilen z.B. im Spritverbrauch führt. Durch die Ausgestaltung mit den seitlichen Führungsschienen wird eine stabile und einfach zu bedienende Abdeckung erzielt. Da sich die Abdeckung sowohl teilweise als auch vollständig über den Innenraum erstrecken läßt, ist es möglich, den hinteren Sitzbereich abzudecken, falls dort keine Personen transportiert werden.

Das rolladenartige Verdeck läßt sich in beliebiger Dachöffnungsstellung und somit auch in halbgeöffneter Stellung (Targa) positionieren. Die Optik des Kraftfahrzeuges kann dadurch je nach Wunsch variiert werden.

Nachfolgend wird anhand der Zeichnung die Erfindung prinzipmäßig an einem Ausführungsbeispiel näher beschrieben.

Es zeigt:
- Fig. 1: Schnittdarstellung eines Kraftfahrzeuges mit geschlossenem Verdeck, ausgeklapptem Dachrahmen und ausgefahrenen C-Säulen,
- Fig. 2: Teilschnitt eines Kraftfahrzeuges mit komplett geschlossenem Verdeck,
- Fig. 3: Schnittdarstellung eines Kraftfahrzeuges mit geöffnetem Verdeck und Darstellung der Bewegungsabläufe von Dachrahmen, C-Säulen, seitlichen und hinteren Abdeckungen,
- Fig. 4: Teilschnitt eines Kraftfahrzeuges mit einem um 90° zur Klappung vorgesehenen vorderen Dachrahmen und einem in Targa-Stellung geöffnetem Verdeck,
- Fig. 5: Teilschnitt eines Kraftfahrzeuges mit versenkten Dachrahmen und C-Säulen, wobei das Verdeck als Abdeckung bis zu einem Vordersitz ausgerollt ist,
- Fig. 6: Ansicht des Innenraumes eines Kraftfahrzeuges in dem das Verdeck als Abdeckung vollständig ausgerollt ist, und
- Fig. 7: Darstellung mehrerer Kraftfahrzeuge von oben mit verschiedenen Stellungen des Verdecks.

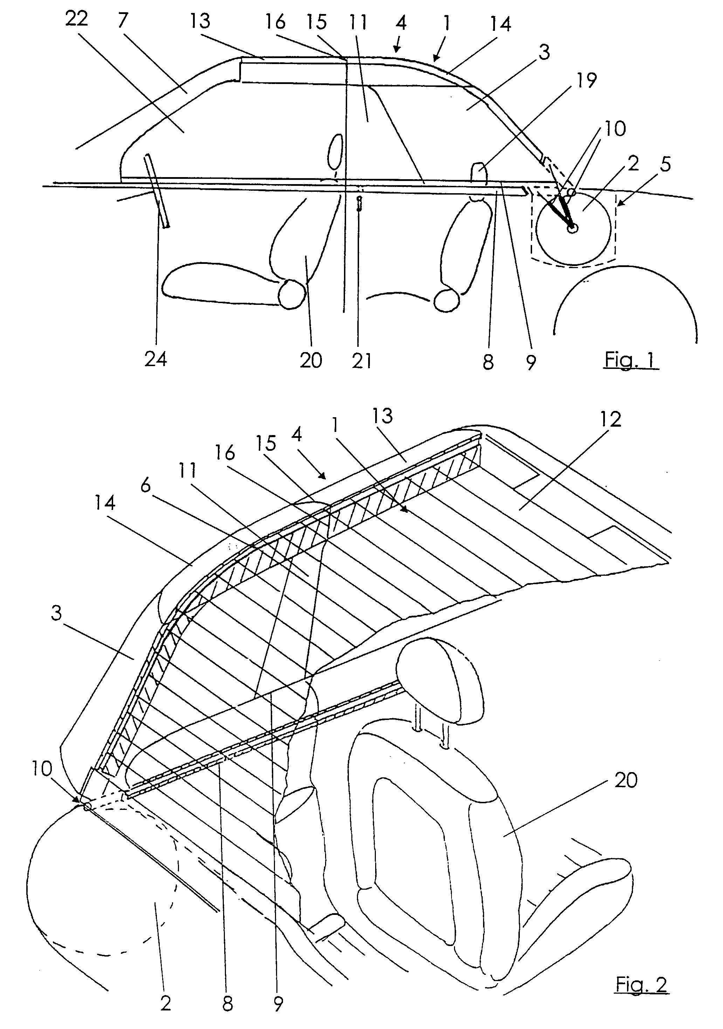

Wie aus Fig. 1 ersichtlich, weist das Carioletverdeck für ein Kraftfahrzeug ein rolladenartig aufwickelbares Verdeck 1, eine Verdeckrolle 2, C-Säulen 3 und Dachrahmen 4 auf. Die Verdeckrolle 2 befindet sich in einem Stauraum 5, der im hinteren Bereich des Kraftfahrzeuges angeordnet ist. Das Verdeck 1 wird in Verdeckführungsschienen 6, die sich von der Verdeckrolle 2 bis zu einer A-Säule 7 erstrecken, geführt. Für den Einsatz des Verdeckes 1 als Abdeckung sind seitliche Führungsschienen 8 unterhalb von Fensterkanten 9 des Kraftfahrzeuges angeordnet.

Die Verdeckrolle 2 ist mit einer verstellbaren Austrittseinrichtung 10 versehen, mit der sich das Verdeck 1 entweder entlang der Verdeckführungsschienen 6 oder der seitlichen Führungsschienen 8 ausrollen läßt. Die Verdeckrolle 2 kann dabei in herkömmlicher Weise angetrieben werden. Die Verdeckführungsschiene 6 ist im vorderen Bereich des Kraftfahrzeuges an den Dachrahmen 4 und im hinteren Bereich des Kraftfahrzeuges an den C-Säulen 3 angebracht. Vor den C-Säulen 3 befindet sich in dem dargestellten Ausführungsbeispiel jeweils ein versenkbares Dreiecksfenster 11.

Wie aus Fig. 2 ersichtlich, weist das Verdeck 1 eine Vielzahl von miteinander verbundenen Einzellamellen 12 auf. Die Einzellamellen 12 bestehen in dem Ausführungsbeispiel wenigstens teilweise aus einem durchsichtigen Material. Durch die Einzellamellen 12 läßt sich das Verdeck 1 in vorteilhafter Weise auf die im Stauraum 5 befindliche Verdeckrolle 2 aufwickeln. Fig. 2 zeigt deutlich die Führung der Einzellamellen 12 in den Verdeckführungsschienen 6. Die Dachrahmen 4 und somit auch die Verdeckführungsschienen 6 sind durch eine Trennlinie 15 in einen vorderen Dachrahmen 13 und einen hinteren Dachrahmen 14 geteilt. Die Trennlinie 15 zwischen dem vorderen Dachrahmen 13 und dem hinteren Dachrahmen 14 bildet dabei eine Fluchtlinie mit der in Fahrtrichtung vorne liegenden Kante des Dreieckfensters 11.

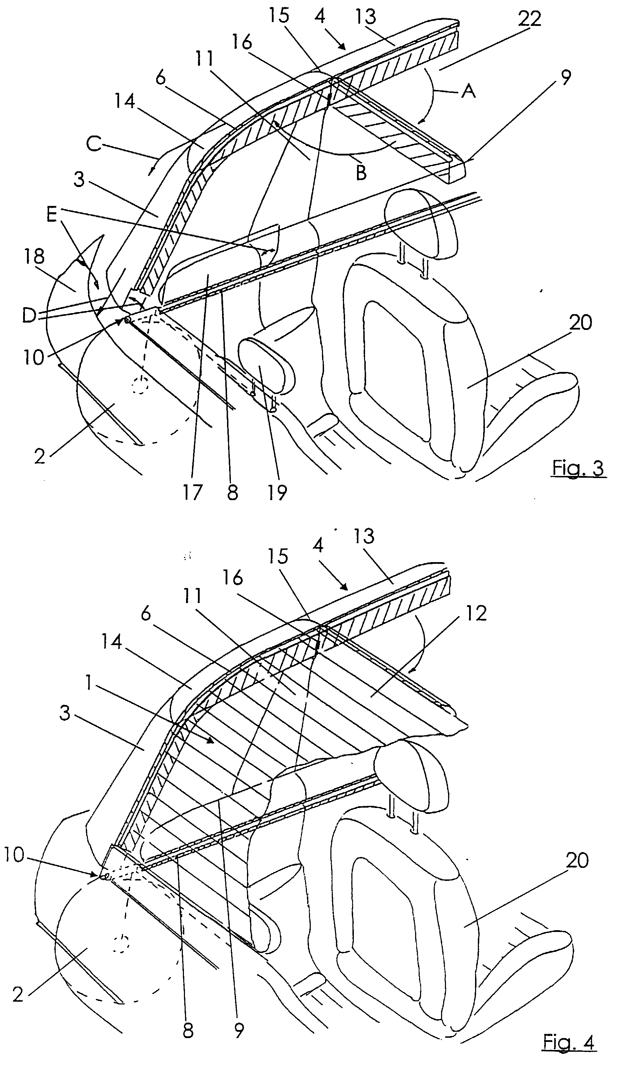

Wie aus Fig. 3 ersichtlich, sind die vorderen Dachrahmen 13 um eine in der Trennlinie 15 angeordnete vertikale Achse 16 bzw. Gelenk in Richtung auf den hinteren Dachrahmen 14 in den Fahrzeuginnenraum schwenkbar. Wie durch den Pfeil A dargestellt, läßt sich der vordere Dachrahmen in einer ersten Stufe um 90° nach innen schwenken. Durch die Verschwenkung beider vorderen Dachrahmen 13 um 90° wird somit ein Überrollbügel gebildet. Die vorderen Dachrahmen 13 können dabei derart ausgebildet sein, daß diese in der um 90° nach innen geschwenkten Position miteinander verbindbar sind und somit der Überrollbügel eine zusätzliche Stabilität erhält.

In einer zweiten Stufe läßt sich, wie durch den Pfeil B angedeutet, der vordere Dachrahmen 13 um weitere 90° in dieselbe Richtung verschwenken, so daß der vordere Dachrahmen 13 seitlich an dem hinteren Dachrahmen 14 anliegt. Der vordere Dachrahmen 13 ist somit um 180° nach innen schwenkbar an der vertikalen Achse 16 angeordnet.

In der Position, in der der vordere Dachrahmen 13 seitlich an dem hinteren Dachrahmen 14 anliegt, können diese derart, in Richtung des Pfeiles C, an der Innenseite der C-Säule 3 verschoben werden, daß weder der vordere Dachrahmen 13 noch der hintere Dachrahmen 14 über die C-Säule 3 hinausragen. Anschließend wird die aus dem Dachrahmen 4 und der C-Säule 3 bestehende Einheit, wie durch die Pfeile D verdeutlicht, in die Karosserie des Kraftfahrzeuges versenkt.

Um das Absenken ermöglichen zu können, müssen allerdings vorher seitliche Abdeckungen 17 und eine hintere Abdeckung 18 in der durch die Pfeile E dargestellten Weise geöffnet werden. In die durch das Öffnen der seitlichen Abdeckungen 17 bzw. hinteren Abdeckungen 18 entstehenden Freiräume kann dann die C-Säule 3 mit den dem zusammengeklappten vorderen und hinteren Dachrahmen 13 bzw. 14 versenkt werden.

Wie in Fig. 4 ersichtlich, kann das Verdeck 1 bis zu den um 90° geschwenkten vorderen Dachrahmen 13, die in dieser Position einen Überrollbügel darstellen, geschlossen werden. Diese Stellung des Verdecks 1 wird im allgemeinen als Targa bezeichnet. Um das Verdeck 1 in dieser Weise von der Verdeckrolle 3 abrollen zu können, muß die Austrittseinrichtung 10 auf die Verdeckführungsschienen 6 ausgerichtet sein.

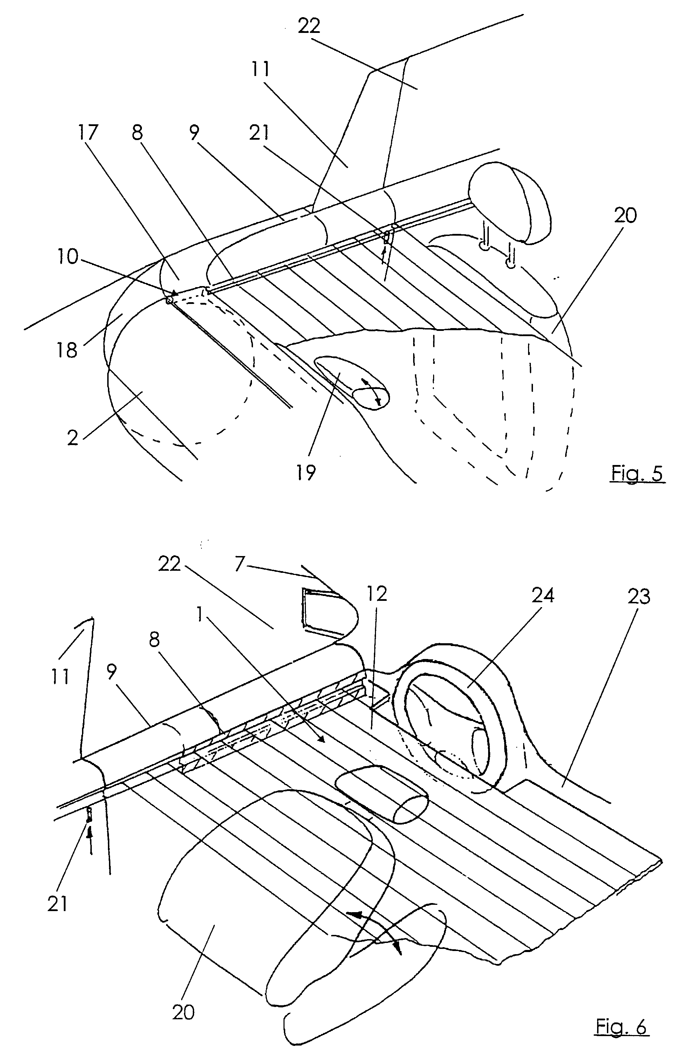

In. der in Fig. 5 dargestellten Variante ist die Öffnung der Austrittseinrichtung 10 bündig mit den seitlichen Führungsschienen 8. Somit läßt sich das Verdeck 1 als Abdeckung für den Innenraum des Kraftfahrzeuges verwenden. Das Verdeck 1 kann dabei beliebig weit von der Verdeckrolle 2 ausgerollt werden. Damit ein Ausrollen des Verdecks 1 möglich ist, müssen möglicherweise im Weg liegende Kopfstützen 19 einer hinteren Sitzbank in Pfeilrichtung nach vorne weggeschwenkt werden. Das Verdeck 1 kann in einer annähernd bündig an einem Vordersitz 20 anliegenden Position mit Hilfe einer Befestigungseinrichtung 21 arretiert bzw. eingehängt werden. Das Dreiecksfenster 11 bzw. vordere Fenster 22 können dabei je nach Wunsch geöffnet oder geschlossen sein.

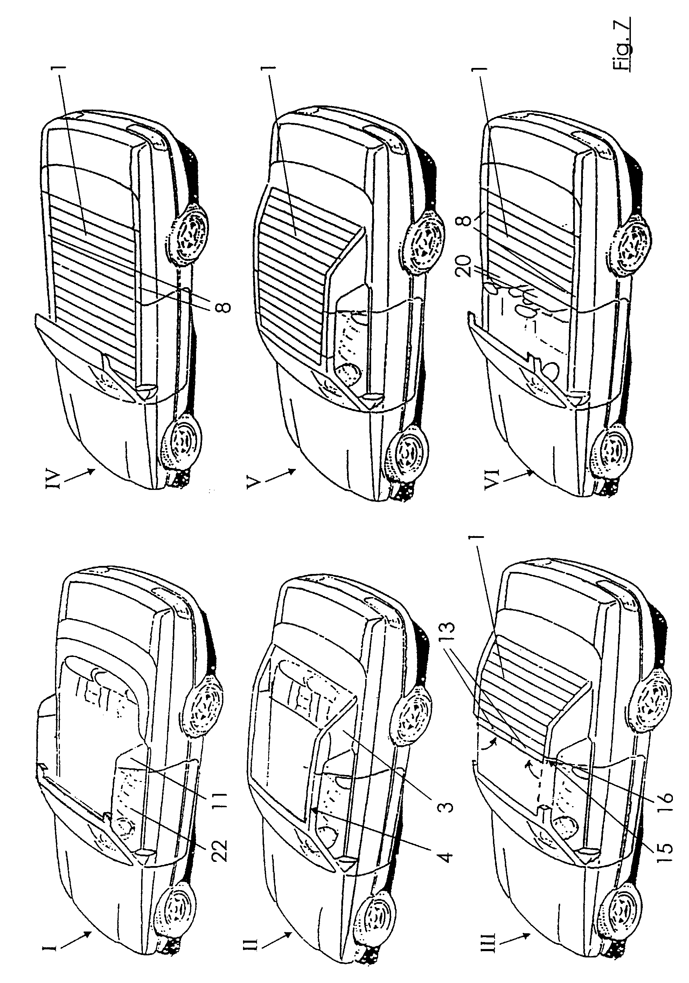

Wie aus Fig. 6 ersichtlich, kann das Verdeck 1 auch als Abdeckung verwendet werden, die den kompletten Innenraum des Kraftfahrzeuges abdeckt. Dabei wird das Verdeck 1 von der Verdeckrolle 2 soweit ausgerollt, bis die Vorderkante des Verdecks bündig mit dem Armaturenbrett 23 abschließt.

Um ein derartiges Ausrollen des Verdecks 1 zu ermöglichen, müssen die Vordersitze 20 in Pfeilrichtung nach vorne weggeklappt werden. Das Verdeck 1 kann analog zu Fig. 5 in einer im Bereich des Armaturenbrettes 23 angebrachten, nicht dargestellten, Befestigungseinrichtung 21 arretiert bzw. eingehängt werden.

Wie in Fig. 7 erkennbar, lassen sich die Optik und die Einsatzmöglichkeit des Kraftfahrzeuges variieren. Die Variante I zeigt das Kraftfahrzeug mit geöffnetem Verdeck 1, geschlossenen Fenstern 11 bzw. 22 und versenkten C-Säulen 3 und Dachrahmen 4.

Bei der Variante II sind im Gegensatz zur Variante I die C-Säulen 3 und die Dachrahmen 4 nicht versenkt.

Die Variante III zeigt das Kraftfahrzeug in TargaStellung. Dabei ist das Verdeck 1 von der Verdeckrolle 2 bis zur Trennlinie 15 bzw. zur vertikalen Achse 16 ausgerollt. Das Verdeck 1 schließt dabei bündig mit den um 90° nach innen geschwenkten vorderen Dachrahmen 13, die in dieser Form einen Überrollbügel darstellen, ab.

Variante IV zeigt das Kraftfahrzeug in einer Ausführungsform, in der das Verdeck 1 als Abdeckung verwandt wird. Dabei sind die Kopfstützen 19 und die Vordersitze 20 umgeklappt, so daß das Verdeck 1 entlang der seitlichen Führungsschienen 8 bis zum Armaturenbrett 23 ausgerollt werden kann. Die C-Säulen 3 und die Dachrahmen 4 sind dabei versenkt.

Variante V zeigt das Kraftfahrzeug in geschlossenem Zustand des Verdeckes 1. Dabei ist das Verdeck 1 ausgehend von der Verdeckrolle 2 entlang der Verdeckführungsschienen 6 vollständig ausgerollt.

Die Variante VI stellt eine Teillösung der Variante IV dar. Dabei wird das Verdeck 1 ebenfalls als Abdeckung für den Innenraum des Kraftfahrzeuges verwandt. Allerdings ist das Verdeck 1 nur teilweise, bis zu den Vordersitzen 20, entlang der seitlichen Führungsschienen 8, ausgerollt.

Durch den Einsatz des Verdeckes 1 als Abdeckung wird der Fahrzeuginnenraum gegen äußere Einwirkungen gesichert. Die Befestigung des Verdeckes 1 an der Befestigungseinrichtung 21 kann beispielsweise durch einen, nicht näher dargestellten, Stift erfolgen.

Die Einzellamellen 12 können aus jedem beliebigen Profil, z.B. Aluminium, Stahl oder Glas bestehen. Möglich ist dabei auch ein teilweiser oder vollständiger Einsatz von durchsichtigen Lamellen 12 z.B. im hinteren Bereich, so daß ein Heckfenster entsteht. Darüber hinaus kann der Bereich oberhalb der Vordersitze 20 mit durchsichtigen Einzellamellen 12 versehen sein. Die Einzellamellen 12 können eine leichte Krümmung aufweisen, so daß die Anpassung an die Dachkrümmung erleichtert wird.

## Patentansprüche

1. Cabrioletverdeck für ein Kraftfahrzeug, das mit seitlichen Dachrahmen (4) und C-Säulen (3) versehen ist, mit einem rolladenartigen Verdeck (1), das eine Vielzahl von miteinander verbundenen Einzellamellen (12) aufweist, wobei das Verdeck in einen Stauraum (5) im hinteren Bereich des Kraftfahrzeuges aufwickelbar ist,
**dadurch gekennzeichnet,** daß
die Dachrahmen (4) und die C-Säulen (3) in den hinteren Bereich des Kraftfahrzeuges absenkbar sind, und daß das Verdeck (1) bei abgesenkten Dachrahmen (4) und C-Säulen (3) in seitlichen Führungsschienen (8) unterhalb einer Fensterkante (9) des Kraftfahrzeuges in Fahrtrichtung nach vorne zur wenigstens teilweisen Abdeckung des Fahrzeuges aus dem Stauraum (5) ausrollbar ist.

2. Cabrioletverdeck nach Anspruch 1,
**dadurch gekennzeichnet,** daß
das Verdeck (1) in dem nach vorne ausgerollten und wenigstens teilweise eine Abdeckung des Fahrzeuges bildenden Zustand des Verdeckes (1) in einer hinteren Position hinter einem Vordersitz (20) und/oder in einer vorderen Position, wobei die Vordersitze (20) umgeklappt sind, im Bereich des Armaturenbrettes (23) des Fahrzeuges arretierbar ist.

3. Cabrioletverdeck nach Anspruch 1 oder 2,
**dadurch gekennzeichnet,** daß
eine in dem Stauraum (5) angeordnete Verdeckrolle (2), auf der die Einzellamellen (12) aufwickelbar sind, mit einer verstellbaren Austrittseinrichtung (10) für die Einzellamellen (12) versehen ist.

4. Cabrioletverdeck nach einem der Ansprüche 1 bis 3,
**dadurch gekennzeichnet,** daß
die seitlichen Dachrahmen (4) jeweils in einen vorderen Dachrahmen (13) und einen hinteren Dachrahmen (14) geteilt sind, wobei der vordere Dachrahmen (13) um eine vertikale Achse (16) schwenkbar mit dem hinteren Dachrahmen (14) verbunden ist.

5. Cabrioletverdeck nach Anspruch 4,
**dadurch gekennzeichnet,** daß
die beiden seitlichen vorderen Dachrahmen (13) jeweils um 90° nach innen schwenkbar sind, wobei sie einen Überrollbügel bilden.

6. Cabrioletverdeck nach Anspruch 5,
**dadurch gekennzeichnet,** daß
das teilweise eingerollte Verdeck (1) zusammen mit den beiden eingeschwenkten vorderen Dachrahmen (13) eine Targa-Stellung des Kraftfahrzeuges bildet.

7. Cabrioletverdeck nach einem der Ansprüche 4 bis 6,
**dadurch gekennzeichnet,** daß
die beiden vorderen Dachrahmen (13) in der um 90° nach innen geschwenkten Position miteinander verbindbar sind.

8. Cabrioletverdeck nach einem der Ansprüche 4 bis 7,
**dadurch gekennzeichnet,** daß
die beiden vorderen Dachrahmen (13) um 180° schwenkbar, seitlich an den hinteren Dachrahmen (14) anlegbar und zusammen parallel an die C-Säulen (3) verschiebbar sind , und daß die vorderen Dachrahmen (13), die hinteren Dachrahmen (14) und die C-Säulen (3) zusammen versenkbar sind.
